(19) Europäisches Patentamt
European Patent Office
Office européen des brevets

(11) **EP 4 571 162 A1**

(12) **DEMANDE DE BREVET EUROPEEN**

(43) Date de publication:
**18.06.2025 Bulletin 2025/25**

(21) Numéro de dépôt: **24219343.1**

(22) Date de dépôt: **12.12.2024**

(51) Classification Internationale des Brevets (IPC):
**F16L 21/00** (2006.01)    **F16L 21/08** (2006.01)
**F16L 25/01** (2006.01)

(52) Classification Coopérative des Brevets (CPC):
**F16L 21/005; F16L 21/08; F16L 25/01**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.12.2023 FR 2314063**

(71) Demandeur: **SAINT-GOBAIN PAM BATIMENT**
**54700 Pont-à-Mousson (FR)**

(72) Inventeurs:
• **SUBRA, Renaud**
**57000 METZ (FR)**
• **BATRANCOURT, Mathis**
**02100 SAINT QUENTIN (FR)**

(74) Mandataire: **Lavoix**
**2, place d'Estienne d'Orves**
**75441 Paris Cedex 09 (FR)**

(54) **COLLIER DE SERRAGE ADAPTÉ POUR JOINDRE DEUX BOUTS UNIS, AVEC SURÉPAISSEUR SUR DES SURFACES RADIALEMENT INTÉRIEURES**

(57) Collier de serrage pour joindre deux bouts unis s'étendant selon un axe central, comprenant :
- un premier demi-collier (16A) et un deuxième demi-collier formant un cerclage,
- une manchette d'étanchéité en matériau élastomère destinée à entourer les deux bouts unis et à être comprimée radialement entre les deux bouts unis et le cerclage,
- des systèmes de fixation des demi-colliers l'un sur l'autre.
Le collier est mobile entre une configuration de repos, et une configuration serrée. Chacun du premier demi-collier et du deuxième demi-collier définit une surface radialement extérieure (30) et une surface radialement intérieure (32). Dans la configuration de repos, la surface radialement extérieure s'étend selon un premier arc de cercle (C1) ayant un premier centre ($\Omega 1$), et des points (M) de la surface radialement intérieure se situent à une distance (D) variable du premier centre du fait d'au moins une surépaisseur (42).

FIG.3

EP 4 571 162 A1

**Description**

Domaine de l'invention

La présente invention concerne un collier de serrage adapté pour joindre deux bouts unis s'étendant selon un axe central, le collier de serrage étant adapté pour former un cerclage autour des deux bouts unis dans une configuration serrée du collier de serrage, et comprenant une manchette d'étanchéité en matériau élastomère adaptée pour entourer les deux bouts unis autour de l'axe central dans la configuration serrée, la manchette d'étanchéité étant comprimée radialement par rapport à l'axe central entre les deux bouts unis et le cerclage.

L'invention concerne également un ensemble comprenant les deux bout unis et un tel collier de serrage joignant les deux bouts unis.

Etat de la technique

Les bouts unis appartiennent par exemple à des éléments de canalisation.

Un tel ensemble est en général enterré, par exemple pour réaliser un puits canadien, c'est-à-dire une installation permettant de faire passer de l'air dans le sol pour climatiser une habitation ou un immeuble en tirant partie de l'inertie thermique du sol.

Toutefois, il arrive que des racines de plantes ou des spores pénètrent entre le collier de serrage et les bouts unis.

Un but de l'invention est donc de fournir une solution technique permettant de réaliser la jonction entre les deux bouts unis, tout en limitant ou en évitant le risque de pénétration de racines ou de spores, la solution devant être facile à mettre en oeuvre et d'un coût abordable.

Résumé de l'invention

A cet effet, l'invention a pour objet un collier de serrage adapté pour joindre deux bouts unis s'étendant selon un axe central, le collier de serrage comprenant :

- un premier demi-collier et un deuxième demi-collier en métal, notamment en fonte, chacun du premier demi-collier et du deuxième demi-collier comprenant une première bride et une deuxième bride,
- une manchette d'étanchéité en matériau élastomère, et
- un premier système de fixation, et un deuxième système de fixation diamétralement opposé au premier système de fixation selon une première direction radiale perpendiculaire à l'axe central,

le collier de serrage étant mobile entre une configuration de repos, et une configuration serrée, dans laquelle :

- le premier demi-collier et le deuxième demi-collier sont plus proches l'un de l'autre que dans la configuration de repos et sont adaptés pour former un cerclage autour des deux bouts unis, et
- la manchette d'étanchéité est destiné à entourer les deux bouts unis, autour de l'axe central et à être comprimée radialement par rapport à l'axe central entre les deux bouts unis et le cerclage,

le premier système de fixation et le deuxième système de fixation étant adaptés pour fixer le premier demi-collier et le deuxième demi-collier l'un sur l'autre dans la configuration serrée,
chacun du premier demi-collier et du deuxième demi-collier définissant une surface radialement extérieure et une surface radialement intérieure,
la surface radialement extérieure s'étendant, dans la configuration de repos, en section selon un plan perpendiculaire à l'axe central, selon un premier arc de cercle ayant un premier centre,
dans lequel, dans la configuration de repos, des points de la surface radialement intérieure se situent, dans ledit plan, à une distance variable du premier centre du fait d'au moins une surépaisseur de chacun du premier demi-collier et du deuxième demi-collier, la distance étant dans une plage de valeurs en fonction d'un angle défini autour du premier centre à partir d'une deuxième direction radiale, l'angle étant dans une plage angulaire maximale s'étendant entre la première bride et la deuxième bride, la deuxième direction radiale étant perpendiculaire à l'axe et à la première direction radiale.

Suivant d'autres aspects avantageux de l'invention, le collier de serrage comprend une ou plusieurs des caractéristiques suivantes, prise(s) isolément ou suivant toutes les combinaisons techniquement possibles :

- la plage de valeurs de la distance a une amplitude comprise entre 0,10 mm et 6,0 mm ;

- la moyenne de la distance des points de la surface radialement intérieure situés sur une plage angulaire donnée comprise dans la plage angulaire maximale est plus faible que la moyenne de la distance des points de la surface radialement intérieure situés en dehors de la plage angulaire donnée dans la plage angulaire maximale ;
- la distance est progressive angulairement, la distance étant minimale dans la deuxième direction radiale et croissante de chaque côté de la deuxième direction radiale ;
- la distance est symétrique par rapport à la deuxième direction radiale en fonction de l'angle ;
- la surépaisseur est en saillie d'une partie de la surface radialement intérieure ;
- la surépaisseur forme une bande s'étendant sur au moins 150° autour de l'axe central dans la configuration serrée ;
- à l'emplacement de la bande, la surface radialement intérieure s'étend, en section selon le plan, selon un deuxième arc de cercle ayant un deuxième centre qui est décalé par rapport au premier centre dans la deuxième direction radiale du côté opposé à la surface radialement intérieure ;
- chacun du premier demi-collier et du deuxième demi-collier comprend : deux parties s'étendant angulairement dans le prolongement l'une de l'autre autour de l'axe central ; et un système de fixation intermédiaire adapté pour solidariser les deux parties l'une avec l'autre, le système de fixation intermédiaire formant une saillie à partir de la surface radialement extérieure ; et
- chacun du premier demi-collier et du deuxième demi-collier comprend au moins deux dents adaptées pour mordre respectivement dans les deux bouts unis.

L'invention a aussi pour objet un ensemble comprenant deux bout unis s'étendant selon un axe central, et un collier de serrage tel que décrit ci-dessus, le collier de serrage étant dans la configuration serrée et joignant les deux bouts unis, le premier demi-collier et le deuxième demi collier formant un cerclage autour des deux bouts unis, la manchette d'étanchéité entourant les deux bouts unis autour de l'axe central et étant comprimée radialement par rapport à l'axe central entre les deux bouts unis et le cerclage.

Figures

L'invention apparaîtra plus clairement à la lecture de la description qui va suivre, donnée uniquement à titre d'exemple non limitatif, et faite en référence aux dessins annexés, sur lesquels :

- la figure 1 est une vue en perspective d'un ensemble selon l'invention,

- la figure 2 est une vue axiale, ou de profil, d'un collier de serrage selon l'invention représenté sur la figure 1, le collier de serrage étant dans la configuration de repos (non serré),

- la figure 3 est une vue axiale, ou de profil, d'un des demi-colliers du collier de serrage représenté sur la figure 2,

- la figure 4 est une vue de dessous du demi-collier représenté sur la figure 3,

- la figure 5 est une vue axiale, ou de profil, d'un collier de serrage constituant une variante du collier de serrage représenté sur la figure 2, dans la configuration de repos, et

- la figure 6 est une vue axiale, ou de profil, d'une partie d'un des demi-colliers du collier de serrage représenté sur la figure 5.

Ensemble

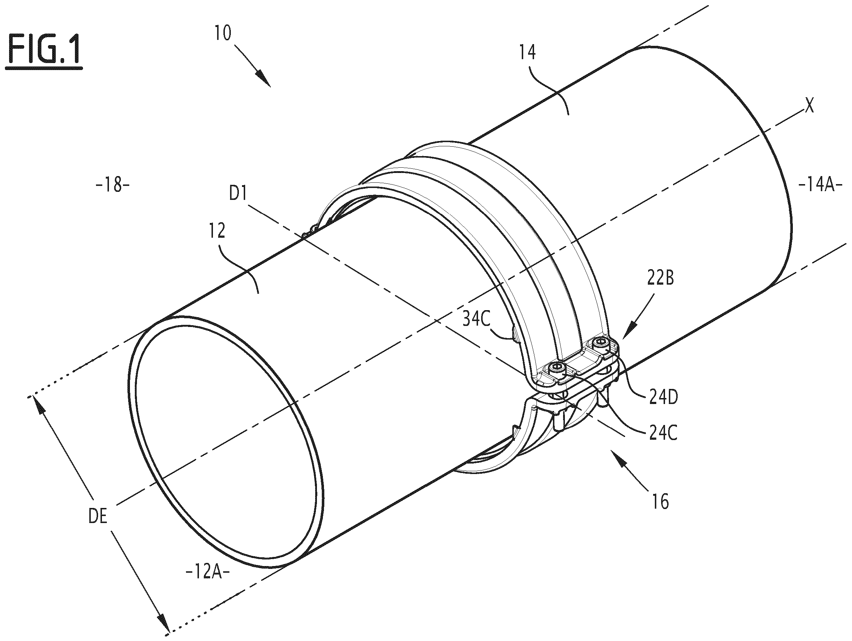

En référence à la figure 1, on décrit un ensemble 10 selon l'invention.

L'ensemble 10 comprend deux bout unis 12, 14 s'étendant selon un axe central X, et un collier de serrage 16 adapté pour joindre les deux bouts unis dans une configuration serrée (figure 1) du collier de serrage.

L'ensemble 10 est par exemple enterré dans un sol 18, et fait avantageusement partie d'un puits canadien (non représenté).

Les deux bouts unis 12, 14 sont avantageusement en fonte ductile. Les deux bouts unis 12, 14 ont par exemple un même diamètre externe DE.

Les deux bouts unis 12, 14 font par exemple partie d'éléments de canalisation 12A, 14A, tels que des tuyaux ou des raccords (très partiellement représentés), ou encore des éléments de réservoirs.

Le diamètre externe DE est dans l'exemple de 200 mm.

Collier de serrage

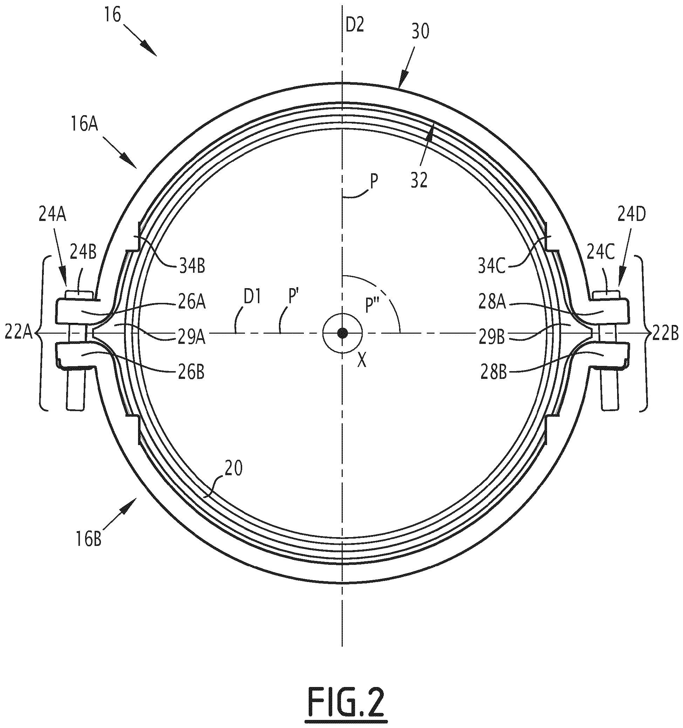

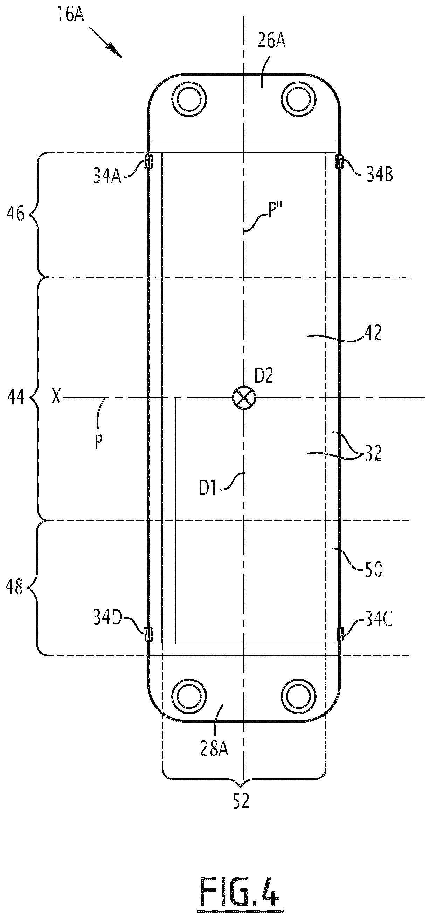

Comme visible sur les figures 2 à 4, le collier de serrage 16 comprend un premier demi-collier 16A, un deuxième demi-collier 16B, et une manchette d'étanchéité 20. Le collier de serrage 16 comprend un premier système de fixation 22A, et un deuxième système de fixation 22B diamétralement opposé au premier système de fixation selon une première direction radiale D1 perpendiculaire à l'axe central X.

On définit également une deuxième direction radiale D2 perpendiculaire à l'axe central X et à la première direction radiale D1.

Le collier de serrage 16 est mobile entre une configuration de repos (figure 2), et la configuration serrée (figure 1), dans laquelle le premier demi-collier 16A et le deuxième demi-collier 16B sont plus proches l'un de l'autre que dans la configuration de repos et forment un cerclage autour des deux bouts unis 12, 14, la manchette d'étanchéité 20 entourant les deux bouts unis autour de l'axe central X et étant comprimée radialement par rapport à l'axe central X entre les deux bouts unis et le cerclage.

Dans la configuration de repos, le collier de serrage 16 présente par exemple une symétrie par rapport à un plan P perpendiculaire à la première direction radiale D1 et passant par l'axe central X.

Dans la configuration de repos, le collier de serrage 16 est avantageusement symétrique par rapport à un plan P' perpendiculaire à la deuxième direction radiale D2 et passant par l'axe central X, à l'exception éventuelle d'organes de fixation 24A, 24B, 24C, 24D du premier système de fixation 22A et du deuxième système de fixation 22B.

Le collier de serrage 16 est par exemple symétrique par rapport à un plan P" perpendiculaire à l'axe central X.

Le premier système de fixation 22A et le deuxième système de fixation 22B sont adaptés pour fixer le premier demi-collier 16A et le deuxième demi-collier 16B l'un sur l'autre dans la configuration serrée, par exemple en les rapprochant l'un de l'autre dans la deuxième direction radiale D2 depuis la configuration de repos vers la configuration serrée.

Le premier système de fixation 22A comprend par exemple une première bride 26A du premier demi-collier 16A, une première bride 26B du deuxième demi-collier 16B, et deux organes de fixation 24A, 24B adaptés pour rapprocher lesdites premières brides 26A, 26B l'une de l'autre, avantageusement dans la deuxième direction radiale D2.

Le deuxième système de fixation 22B comprend par exemple une deuxième bride 28A du premier demi-collier 16A, une deuxième bride 28B du deuxième demi-collier 16B, et deux organes de fixation 24C, 24D adaptés pour rapprocher lesdites deuxièmes brides 28A, 28B l'une de l'autre.

En variante, les systèmes de fixation 22A, 22B ne comprennent qu'un seul organe de fixation chacun.

Les organes de fixation 24A, 24B, 24C, 24D sont par exemple des vis.

La manchette d'étanchéité est en matériau élastomère, par exemple en caoutchouc. Avantageusement, la manchette d'étanchéité comporte deux renflements 29A, 29B, respectivement situés en vis-à-vis du premier système de fixation 22A et du deuxième système de fixation 22B.

Demi-colliers

Le premier demi-collier 16A et le deuxième demi-collier 16B sont en matériau métallique rigide, par exemple en fonte.

Le premier demi-collier 16A et le deuxième demi-collier 16B étant symétriques l'un de l'autre dans l'exemple, seul le premier demi-collier sera décrit ci-dessous en référence aux figures 2 à 4.

Le premier demi-collier 16A définit une surface radialement extérieure 30, et une surface radialement intérieure 32 en contact avec la manchette d'étanchéité 20.

Le premier demi-collier 16A s'étend autour de l'axe central X depuis et y compris la première bride 26A jusqu'à et y compris la deuxième bride 28A, avantageusement sur au moins 150° vu de l'axe central X.

Le premier demi-collier 16A comprend avantageusement quatre dents 34A, 34B, 34C, 34D en saillie de la surface radialement intérieure 32, adaptées pour mordre respectivement dans les deux bouts unis 12, 14, à côté de la manchette d'étanchéité 20, afin de réaliser une continuité électrique entre les deux bouts unis, et/ou pour retenir axialement les deux bouts unis lors d'un test d'étanchéité par mise en pression.

En variante (non représentée), les dents sont au nombre de deux.

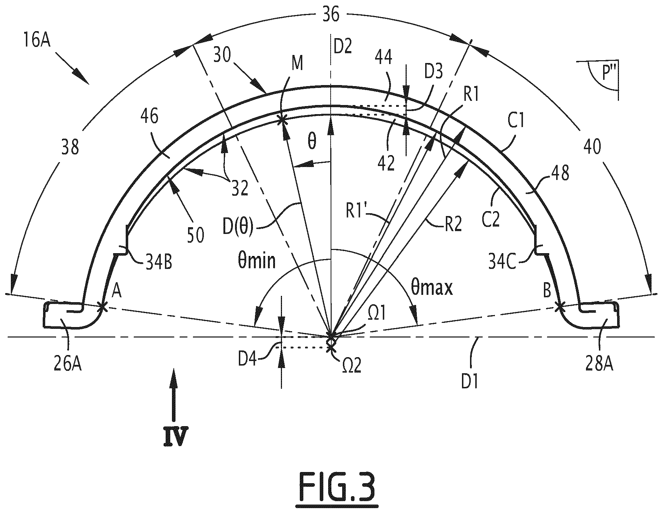

Comme visible sur la figure 3, dans la configuration de repos (en l'absence de serrage), la surface radialement extérieure 30 s'étend, en section selon le plan P", selon un premier arc de cercle C1 ayant un premier centre $\Omega1$.

Le premier arc de cercle C1 définit un premier rayon R1.

Dans la configuration de repos, des points M de la surface radialement intérieure 32 se situent, dans le plan P", à une distance D variable du premier centre $\Omega1$ du fait d'au moins une surépaisseur 42 du premier demi-collier 16A.

La distance D évolue dans une plage de valeurs en fonction d'un angle $\theta$ défini autour du premier centre $\Omega1$ à partir de la deuxième direction radiale D2, l'angle $\theta$ étant dans une plage angulaire maximale 36-38-40 s'étendant entre la première bride 26A et la deuxième bride 28A.

Ainsi, la distance D est variable dans la plage angulaire maximale 36-38-40. Une variation de la distance D est observable sur cette plage angulaire maximale 36-38-40 sans qu'il soit besoin de considérer des points M situés à l'extérieur de la plage angulaire maximale 36-38-40. En particulier, on ne considère pas les points M situés dans des secteurs angulaires occupés respectivement par la première bride 26A et par la deuxième bride 28A., ces secteurs angulaires n'étant pas compris dans la plage angulaire maximale 36-38-40.

La moyenne DD1 de la distance D sur une plage angulaire donnée 36, qui est dans l'exemple décrit une plage médiane, est plus faible que la moyenne DD2 de la distance D sur les autres plages angulaires, qui dans l'exemple décrit sont deux plages angulaires latérales 38, 40.

La plage angulaire donnée 36 s'étend par exemple sur 60° autour du premier centre $\Omega$1 et est symétrique par rapport à la deuxième direction radiale D2.

Les deux plages angulaires latérales 38, 40 s'étendent respectivement entre la première bride 26A et la plage angulaire donnée 36, et entre la deuxième bride 28A et la plage angulaire donnée 36.

Comme visible sur la figure 3, la première bride 26A est située en dehors de la plage angulaire latérale 38 et la deuxième bride 28A est située en dehors de la plage angulaire latérale 40.

Selon des variantes non représentées, le premier demi-collier 16A comporte plusieurs surépaisseurs, par exemple formant plusieurs bandes s'étendant autour de l'axe central X et décalées les unes par rapport aux autres selon l'axe central X.

Selon d'autres variantes non représentées, le premier demi-collier 16A comporte au moins une surépaisseur s'étendant sur une plage angulaire non médiane et/ou non symétrique par rapport à la deuxième direction radiale D2.

Surépaisseur

Dit autrement, dans l'exemple décrit, la surépaisseur 42 est présente au moins dans une partie médiane 44 du premier demi-collier 16A correspondant à la plage angulaire donnée 36, et est plus prononcée en moyenne dans cette partie médiane que dans des parties latérales 46, 48 du premier demi-collier situées de part et d'autre de la partie médiane 44 dans la première direction radiale D1. La surépaisseur 42 est d'autant plus prononcée localement que la distance D avec le premier centre $\Omega$1 est faible. La surépaisseur 42 se voit donc dans la plage angulaire maximale 36-38-40.

Selon une variante non représentée, la surépaisseur 42 n'est présente que dans la plage angulaire donnée 36, c'est-à-dire dans la partie médiane 44 du premier demi-collier 16A.

Par exemple, la surépaisseur 42 est progressive angulairement, la distance D étant minimale dans la deuxième direction radiale D2 et croissante, voire strictement croissante de chaque côté de la deuxième direction radiale D2.

L'angle $\theta$ est par exemple positif du côté de la deuxième bride 28A et négatif du côté de la première bride 26A.

La surépaisseur 42 est par exemple symétrique par rapport à la deuxième direction radiale D2, la distance D étant symétrique en fonction de l'angle $\theta$, comme dans l'exemple décrit. Dit autrement, la distance D vérifie l'équation suivante : D(-$\theta$) = D($\theta$).

Il est alors à noter que, lorsque la plage angulaire donnée 36 s'étend sur 60° de part et d'autre de la deuxième direction radiale D2, la moyenne DD1 peut être calculée de la manière suivante :

$$DD1 = \int_{-30°}^{+30°} D(\theta)d\theta / 60°$$

La moyenne DD2 peut être calculée de la manière suivante :

$$DD2 = \left[\int_{\theta_{min}}^{-30°} D(\theta)d\theta + \int_{+30°}^{\theta_{max}} D(\theta)d\theta\right] / (\theta_{max} - \theta_{min} - 60°)$$

où $\theta_{min}$ et $\theta_{max}$ sont des angles $\theta$ définis respectivement par la première bride 26A et la deuxième bride 28A, et correspondent aux extrémités de la plage angulaire maximale 36-38-40. Par exemple $\theta_{min}$ et $\theta_{max}$ valent respectivement -80° et +80°.

La distance D évolue dans une plage de valeurs en fonction de l'angle $\theta$, la plage ayant une amplitude D3 par exemple comprise entre 0,1 mm et 6,0 mm, de préférence entre 1,0 et 4,0 mm.

D3 correspond à la valeur maximale de la surépaisseur 42, qui est par exemple comprise entre 0,1 mm et 6,0 mm, de préférence entre 1,0 et 4,0 mm.

La surépaisseur 42 est par exemple en saillie d'une partie 50 de la surface radialement intérieure 32. Dit autrement, la surépaisseur 42 « se voit » sur le premier demi-collier 16A.

Selon une variante non représentée, la surépaisseur 42 est présente sur toute une face radialement intérieure du premier demi-collier 16A, et ne peut être distinguée de la surface radialement intérieure 32. Dit autrement, il n'existe pas de partie 50 non concernée par la surépaisseur 42.

La surépaisseur 42 peut être vue comme un ajout de matière permettant d'augmenter l'épaisseur du premier demi-collier 16A.

Dans l'exemple, la surépaisseur 42 forme une bande 52 s'étendant avantageusement sur au moins 150° autour de l'axe central X dans la configuration serrée.

La partie 50 est par exemple cylindrique de rayon R1' autour d'un axe passant par le premier centre $\Omega1$ et parallèle à l'axe central X.

Avantageusement, à l'emplacement de la bande 52, la surface radialement intérieure 32 s'étend, en section selon le plan P'', selon un deuxième arc de cercle C2 ayant un deuxième centre $\Omega2$ qui est décalé d'une distance D4 par rapport au premier centre $\Omega1$ dans la deuxième direction radiale D2 du côté opposé à la surface radialement intérieure 32. La surépaisseur 42 est cylindrique dans l'exemple décrit.

Le deuxième arc de cercle C2 définit un deuxième rayon R2 supérieur au rayon R1'.

La surépaisseur 42 est, dans l'exemple, maximale dans la deuxième direction radiale D2, où la surépaisseur est égale à l'amplitude D3. La surépaisseur 42 décroît par exemple progressivement à mesure que l'on s'éloigne de la deuxième direction radiale D2 jusqu'à la première bride 26A et la deuxième bride 28A.

La surépaisseur 42 décroît par exemple avec l'angle $\theta$ (considéré en valeur absolue) et s'annule en deux points A et B définis par les angles $\theta_{min}$ et $\theta_{max}$.

Dans l'exemple décrit, l'amplitude D3 vérifie l'équation D3 = D4 + R1' - R2. L'amplitude D3 est alors inférieure à la distance D4.

Selon d'autres variantes non représentées, la ou les surépaisseurs forment des tronçons successifs autour de l'axe central X, séparés par des portions de la surface radialement intérieure 32 dépourvues de surépaisseur.

Grâce aux caractéristiques décrites ci-dessus, notamment la surépaisseur 42, le collier de serrage 16 exerce une force de serrage sur les deux bouts unis 12, 14 qui est plus uniforme qu'en l'absence de la surépaisseur. Le collier de serrage 16 permet de réaliser la jonction entre les deux bouts unis 12, 14, tout en limitant ou en évitant le risque de pénétration de racines ou de spores (non représentées). Le collier de serrage 16 est en outre facile à mettre en oeuvre et d'un coût abordable.

Variante

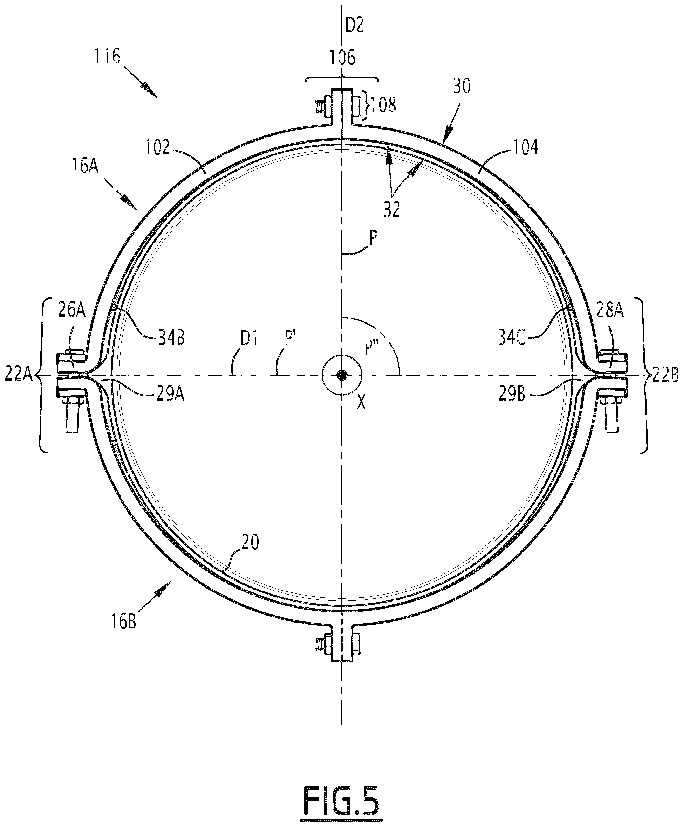

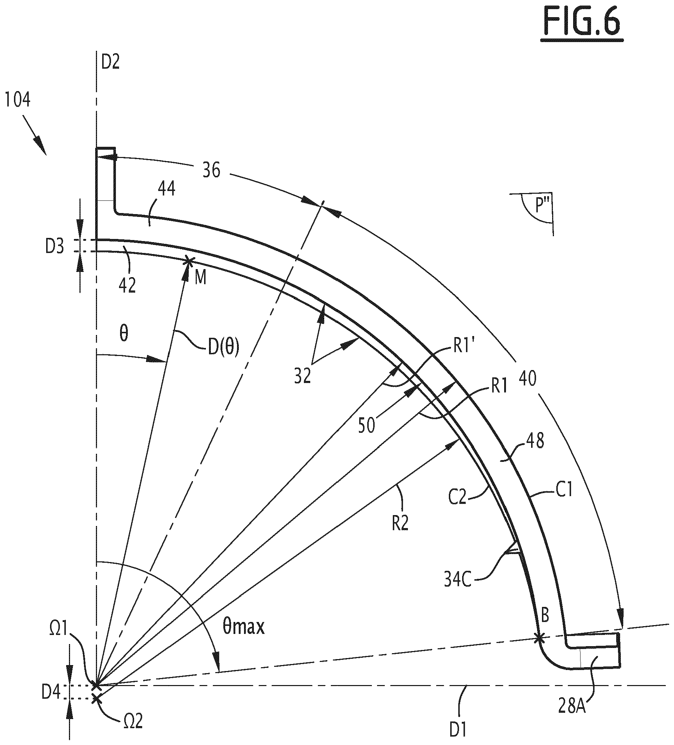

En référence aux figures 5 et 6, on va maintenant décrire un collier de serrage 116 constituant une variante du collier de serrage 16. Le collier de serrage 116 est analogue au collier de serrage 16 représenté sur les figures 1 à 4. Les éléments similaires portent les mêmes références numériques ou alphanumériques et ne seront pas décrits à nouveau. Seules les différences sont décrites en détail ci-après.

Pour les raisons expliquées ci-dessus, seul le premier demi-collier 16A sera décrit.

Le premier demi-collier 16A comprend deux parties 102, 104 s'étendant angulairement dans le prolongement l'une de l'autre autour de l'axe central X.

Un système de fixation intermédiaire 106 permet de solidariser les deux parties 102, 104 l'une avec l'autre. Le système de fixation intermédiaire 106 forme une saillie 108 à partir de la surface radialement extérieure 30.

Le système de fixation intermédiaire 106 se situe par exemple à mi-distance du premier système de fixation 22A et du deuxième système de fixation 22B.

Le collier de serrage 116 est avantageusement adapté pour un diamètre externe DE des bouts unis 12, 14 plus important que celui représenté sur la figure 1, par exemple un diamètre externe de 300 mm, ou encore de 500 mm.

Le collier de serrage 116 présente par ailleurs les mêmes avantages que le collier de serrage 16.

**Revendications**

1. Collier de serrage (16 ; 116) adapté pour joindre deux bouts unis (12, 14) s'étendant selon un axe central (X), le collier de serrage (16 ; 116) comprenant :

   - un premier demi-collier (16A) et un deuxième demi-collier (16B) en métal, notamment en fonte, chacun du premier demi-collier (16A) et du deuxième demi-collier (16B) comprenant une première bride (26A, 26B) et une deuxième bride (28A, 28B),
   - une manchette d'étanchéité (20) en matériau élastomère, et
   - un premier système de fixation (22A), et un deuxième système de fixation (22B) diamétralement opposé au premier système de fixation (22A) selon une première direction radiale (D1) perpendiculaire à l'axe central (X), le collier de serrage (16 ; 116) étant mobile entre une configuration de repos, et une configuration serrée, dans laquelle :

- le premier demi-collier (16A) et le deuxième demi-collier (16B) sont plus proches l'un de l'autre que dans la configuration de repos et sont adaptés pour former un cerclage autour des deux bouts unis (12, 14), et
- la manchette d'étanchéité (20) est destiné à entourer les deux bouts unis (12,14), autour de l'axe central (X) et à être comprimée radialement par rapport à l'axe central (X) entre les deux bouts unis (12,14) et le cerclage,

le premier système de fixation (22A) et le deuxième système de fixation (22B) étant adaptés pour fixer le premier demi-collier (16A) et le deuxième demi-collier (16B) l'un sur l'autre dans la configuration serrée,
chacun du premier demi-collier (16A) et du deuxième demi-collier (16B) définissant une surface radialement extérieure (30) et une surface radialement intérieure (32),
la surface radialement extérieure (30) s'étendant, dans la configuration de repos, en section selon un plan (P") perpendiculaire à l'axe central (X), selon un premier arc de cercle (C1) ayant un premier centre ($\Omega$1),
dans lequel, dans la configuration de repos, des points (M) de la surface radialement intérieure (32) se situent, dans ledit plan (P"), à une distance (D) variable du premier centre ($\Omega$1) du fait d'au moins une surépaisseur (42) de chacun du premier demi-collier (16A) et du deuxième demi-collier (16B), la distance (D) étant dans une plage de valeurs en fonction d'un angle ($\theta$) défini autour du premier centre ($\Omega$1) à partir d'une deuxième direction radiale (D2), l'angle ($\theta$) étant dans une plage angulaire maximale (36-38-40) s'étendant entre la première bride (26A, 26B) et la deuxième bride (28A, 28B), la deuxième direction radiale (D2) étant perpendiculaire à l'axe (X) et à la première direction radiale (D1).

2. Collier de serrage (16 ; 116) selon la revendication 1, dans lequel la plage de valeurs de la distance (D) a une amplitude (D3) comprise entre 0,10 mm et 6,0 mm.

3. Collier de serrage (16 ; 116) selon la revendication 1 ou 2, dans lequel la moyenne de la distance (D) des points (M) de la surface radialement intérieure (32) situés sur une plage angulaire donnée (36) comprise dans la plage angulaire maximale (36-38-40) est plus faible que la moyenne de la distance (D) des points (M) de la surface radialement intérieure (32) situés en dehors de la plage angulaire donnée (36) dans la plage angulaire maximale (36-38-40).

4. Collier de serrage (16 ; 116) selon l'une quelconque des revendications 1 à 3, dans lequel la distance (D) est progressive angulairement, la distance (D) étant minimale dans la deuxième direction radiale (D2) et croissante de chaque côté de la deuxième direction radiale (D2).

5. Collier de serrage (16 ; 116) selon l'une quelconque des revendications 1 à 4, dans lequel la distance (D) est symétrique par rapport à la deuxième direction radiale (D2) en fonction de l'angle ($\theta$).

6. Collier de serrage (16 ; 116) selon l'une quelconque des revendications 1 à 5, dans lequel la surépaisseur (42) est en saillie d'une partie (50) de la surface radialement intérieure (32).

7. Collier de serrage (16 ; 116) selon l'une quelconque des revendications 1 à 6, dans lequel la surépaisseur (42) forme une bande (52) s'étendant sur au moins 150° autour de l'axe central (X) dans la configuration serrée.

8. Collier de serrage (16 ; 116) selon l'une quelconque des revendications 1 à 7, dans lequel, à l'emplacement de la bande (52), la surface radialement intérieure (32) s'étend, en section selon le plan (P"), selon un deuxième arc de cercle (C2) ayant un deuxième centre ($\Omega$2) qui est décalé par rapport au premier centre ($\Omega$1) dans la deuxième direction radiale (D2) du côté opposé à la surface radialement intérieure (32).

9. Collier de serrage (116) selon l'une quelconque des revendications 1 à 8, dans lequel chacun du premier demi-collier (16A) et du deuxième demi-collier (16B) comprend :

- deux parties (102, 104) s'étendant angulairement dans le prolongement l'une de l'autre autour de l'axe central (X), et
- un système de fixation intermédiaire (106) adapté pour solidariser les deux parties (102, 104) l'une avec l'autre, le système de fixation intermédiaire (106) formant une saillie (108) à partir de la surface radialement extérieure (30).

10. Collier de serrage (16 ; 116) selon l'une quelconque des revendications 1 à 9, dans lequel chacun du premier demi-collier (16A) et du deuxième demi-collier (16B) comprend au moins deux dents (34A, 34B, 34C, 34D) adaptées pour mordre respectivement dans les deux bouts unis (12, 14).

11. Ensemble comprenant deux bout unis s'étendant selon un axe central (X), et un collier de serrage (16 ; 116) tel que décrit par l'une quelconque des revendications 1 à 10, le collier de serrage (16 ; 116) étant dans la configuration serrée et joignant les deux bouts unis (12, 14), le premier demi-collier (16A) et le deuxième demi collier (16B) formant un cerclage autour des deux bouts unis (12, 14), la manchette d'étanchéité (20) entourant les deux bouts unis (12, 14) autour de l'axe central (X) et étant comprimée radialement par rapport à l'axe central (X) entre les deux bouts unis (12, 14) et le cerclage.

FIG.1

EP 4 571 162 A1

FIG.2

**FIG.3**

## FIG.4

## FIG.5

FIG.6

**Europäisches Patentamt**
**European Patent Office**
**Office européen des brevets**

# RAPPORT DE RECHERCHE EUROPEENNE

Numéro de la demande

EP 24 21 9343

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 725 756 B2 (VICTAULIC CO OF AMERICA [US]) 15 août 2023 (2023-08-15) | 1-8,11 | INV.<br>F16L21/00 |
| Y | * colonne 3, ligne 14 - colonne 4, ligne 16 *<br>* figures 1, 3, 3A * | 9,10 | F16L21/08<br>F16L25/01 |
| | ----- | | |
| X | US 2022/205570 A1 (LU ZHIGANG [CN] ET AL) 30 juin 2022 (2022-06-30) | 1-7,11 | |
| A | * alinéa [0210] - alinéa [0212] *<br>* figures 30-32 * | 8-10 | |
| | ----- | | |
| Y | US 8 424 918 B2 (GIBB JOHN [CA]; DOLE DOUGLAS R [US] ET AL.) 23 avril 2013 (2013-04-23)<br>* figure 8 * | 9 | |
| | ----- | | |
| Y | GB 2 305 481 A (GLYNWED FOUNDRY PROD LTD [GB]) 9 avril 1997 (1997-04-09) | 10 | |
| A | * abrégé *<br>* figures * | 1-9,11 | |
| | ----- | | DOMAINES TECHNIQUES RECHERCHES (IPC) |
| A | GB 2 098 297 A (STANTON & STAVELEY LTD) 17 novembre 1982 (1982-11-17)<br>* abrégé *<br>* figures * | 1-11 | F16L |
| | ----- | | |

Le présent rapport a été établi pour toutes les revendications

| Lieu de la recherche | Date d'achèvement de la recherche | Examinateur |
|---|---|---|
| Munich | 20 mars 2025 | Vecchio, Giovanni |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 9343

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2025

| Document brevet cité au rapport de recherche | | Date de publication | Membre(s) de la famille de brevet(s) | | Date de publication |
|---|---|---|---|---|---|
| US 11725756 | B2 | 15-08-2023 | AU | 2016381244 A1 | 31-05-2018 |
| | | | BR | 112018011017 A2 | 21-11-2018 |
| | | | CA | 3009356 A1 | 06-07-2017 |
| | | | CL | 2018001743 A1 | 09-11-2018 |
| | | | CN | 108431479 A | 21-08-2018 |
| | | | CO | 2018006483 A2 | 10-07-2018 |
| | | | DK | 3397884 T3 | 03-08-2020 |
| | | | EP | 3397884 A1 | 07-11-2018 |
| | | | ES | 2804798 T3 | 09-02-2021 |
| | | | HK | 1253091 A1 | 06-06-2019 |
| | | | JP | 6710766 B2 | 17-06-2020 |
| | | | JP | 2019500559 A | 10-01-2019 |
| | | | KR | 20180095696 A | 27-08-2018 |
| | | | MA | 42579 A1 | 31-01-2019 |
| | | | MY | 196485 A | 17-04-2023 |
| | | | NZ | 742362 A | 26-07-2019 |
| | | | PE | 20181283 A1 | 07-08-2018 |
| | | | PH | 12018501098 A1 | 21-01-2019 |
| | | | PL | 3397884 T3 | 16-11-2020 |
| | | | RU | 2685169 C1 | 16-04-2019 |
| | | | SA | 518391730 B1 | 12-09-2021 |
| | | | SG | 11201803931W A | 28-06-2018 |
| | | | TW | 201730470 A | 01-09-2017 |
| | | | US | 2017184226 A1 | 29-06-2017 |
| | | | US | 2019271420 A1 | 05-09-2019 |
| | | | US | 2024167592 A1 | 23-05-2024 |
| | | | WO | 2017116969 A1 | 06-07-2017 |
| US 2022205570 | A1 | 30-06-2022 | AU | 2020462733 A1 | 07-04-2022 |
| | | | CA | 3143862 A1 | 07-01-2021 |
| | | | CN | 112145835 A | 29-12-2020 |
| | | | CN | 113692511 A | 23-11-2021 |
| | | | EP | 3988830 A1 | 27-04-2022 |
| | | | ES | 2961570 T3 | 12-03-2024 |
| | | | IL | 289180 A | 01-02-2022 |
| | | | JP | 7374519 B2 | 07-11-2023 |
| | | | JP | 2022538652 A | 05-09-2022 |
| | | | KR | 20220016160 A | 08-02-2022 |
| | | | US | 10711929 B1 | 14-07-2020 |
| | | | US | 10851928 B1 | 01-12-2020 |
| | | | US | 2020408341 A1 | 31-12-2020 |
| | | | US | 2022205570 A1 | 30-06-2022 |
| | | | WO | 2021000834 A1 | 07-01-2021 |
| US 8424918 | B2 | 23-04-2013 | US | 2008007061 A1 | 10-01-2008 |
| | | | US | 2009206598 A1 | 20-08-2009 |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 24 21 9343

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2025

| Document brevet cité au rapport de recherche | | Date de publication | Membre(s) de la famille de brevet(s) | | Date de publication |
|---|---|---|---|---|---|
| | | | US | 2010320756 A1 | 23-12-2010 |
| | | | WO | 2008008174 A2 | 17-01-2008 |
| GB 2305481 | A | 09-04-1997 | AUCUN | | |
| GB 2098297 | A | 17-11-1982 | DE | 3217069 A1 | 02-12-1982 |
| | | | ES | 274455 U | 01-04-1984 |
| | | | FR | 2505963 A1 | 19-11-1982 |
| | | | GB | 2098297 A | 17-11-1982 |

EPO FORM P0460

Pour tout renseignement concernant cette annexe : voir Journal Officiel de l'Office européen des brevets, No.12/82

page 2 de 2